# EUROPEAN PATENT APPLICATION

(11) **EP 1 471 404 A2**
(43) Date of publication of application: **27.10.2004**
(21) Application number: 04252375.3
(22) Date of filing: 23.04.2004
(51) Int. Cl.: G05B 19/408

(54) **Numerical control apparatus for machine tool**

(30) Priority: 25.04.2003 JP 2003122846
(71) Applicant: STAR MICRONICS CO., LTD., Shizuoka-shi, Shizuoka (JP)
(72) Inventor: Takeshita, Akihide, c/o Star Micronics Co., Ltd., Shizuoka-shi, Shizuoka (JP); Sugiyama, Tetsuya, c/o Star Micronics Co., Ltd., Shizuoka-shi, Shizuoka (JP); Inoue, Yukihiro, c/o Star Micronics Co., Ltd., Shizuoka-shi, Shizuoka (JP); Masuda, Hiroyuki, c/o Star Micronics Co., Ltd., Shizuoka-shi, Shizuoka (JP); Tsujimura, Naofumi, c/o Star Micronics Co., Ltd., Shizuoka-shi, Shizuoka (JP)
(74) Representative: Skone James, Robert Edmund

(57) **Abstract**

A numerical control apparatus for machine tool, includes an NC program storage portion for storing an NC program; a transformer means for performing an optimizing process for analyzing the NC program and parameters in the machine tool and transforming the NC program in an optimum condition; an optimized program generated by said transformer means and containing an optimized main program, and optimized data; first and second optimized data storage portions for storing and holding the optimized data. While the machine tool is operated according to the optimized program on the basis of the optimized data stored in the first optimized data storage portion, the transformer means can generate new optimized data on the basis of the NC program and can write a transformed data in the second optimized data storage portions.

## Description

### BACKGROUND OF THE INVENTION

### Field of the Invention

The present invention relates to a numerical control apparatus for machine tool and particularly to correction of the position of a tool cutting edge.

### Background Art

At present, two types of programs are known as machining programs stored in a numerical control apparatus provided in a machine tool. One is a sequential calculation type such as a so-called NC program having a coding scheme such as a G coding scheme, an M coding scheme or a T coding scheme. The other is a pre-transformation type in which a program to be interpreted and executed as an interpreter is transformed into the form of electronic cam data in advance. (The term "electronic cam data" means data stored in the numerical control apparatus in the form of a table indicating correspondence of data as a source of a position command supplied to a control axis to a position on a reference axis). In the sequential calculation type, the contents of the program are line-by-line read and interpreted so that the numerical control apparatus calculates machine coordinate values for a servomotor and sends the coordinate values to the servomotor sequentially. Because the sequential calculation type is based on the thought that NC codes are line-by-line read and interpreted to execute commands given to a subject of control, various ideas such as pre-reading of blocks from the machining program are required for increasing machining speed in numerical control using this type machining program. In the pre-transformation type, all the contents of an NC program are initially read, interpreted and pre-transformed so that a machining program generated by pre-transformation is stored. Taking electronic cam control as an example, the electronic cam data are stored. Data to be sent to the servomotor in a certain position on a reference axis are read by referring to the electronic cam data table. The numerical control apparatus sends a position command to a control axis as an objective on the basis of data corresponding to the certain position on the reference axis when the machine tool is operated under electronic cam control.

In the sequential calculation type, the time for interpreting one line is required at the time of operation. On the contrary, in the pre-transformation type, the time for interpreting one line is not required at the time of operation. Consequently, in the pre-transformation type, optimization such as shortening of the machining time can be applied to the machining program in advance. As described above, the pre-transformation type, however, requires the time and labor for generating data such as electronic cam data and a main program for reading the data in advance after a so-called NC program is generated. A machine tool described in Patent Document 1 has been already commonly known as a technique for performing machining by using the electronic cam data and the main program generated in the aforementioned manner.

For example, in a process of machining, a tool is however worn little by little regardless of use of either type machining program. The position of a cutting edge of the tool is displaced between the initial stage and the last stage of machining work. It is therefore necessary that the position of the cutting edge of the tool can be corrected whenever necessary. That is, because information set based on machine-specific information varies with time, information for correcting the variation must be reflected on the machining program.

When the position of the cutting edge of the tool needs to be corrected as described above, the following process must be carriedout in the case of the pre-transformation type. That is, correction values necessary for the numerical control apparatus are input to the numerical control apparatus, so that the locus of movement of the tool is calculated again. Consequently, a locus of movement of the tool on which the correction values of the position of the cutting edge of the tool are reflected can be obtained so that a workpiece can be machined appropriately. (See JP-A-2003-58211)

According to the background art, first in the pre-transformation type program, it is however necessary to once stop the operation of the machine tool to correct the locus of movement of the tool. This is because there is no assumption that the locus of movement of the tool will be corrected when the machine tool is in operation. (Because the pre-transformation type machining program data are data obtained by interpolation, it is difficult to apply correction values to the data during machining.)

On the other hand, when a so-called NC program using a coding scheme such as a G coding scheme, an M coding scheme or a T coding scheme is used for machining a workpiece, the position of the cutting edge of the tool can be corrected during machining because interpolation can be calculated whenever necessary. According to the case, the correction input can be reflected on machining of the workpiece immediately. In this respect, the numerical control apparatus using the sequential calculation type NC program is higher in convenience such as handling property.

That is, in comparison with the sequential calculation type, the pre-transformation type has a problem that the total machining time becomes longer because it is necessary to once stop the operation of the machine tool to correct the position of the cutting edge of the tool, and a problem that a troublesome operation such as an operation of stopping/restarting the operation of the machine tool is required whenever the position of the cutting edge is corrected. Consequently, the feeling in use is quite changed in comparison with machining using the NC program. The background art includes various problems that handling property is worsened.

### SUMMARY OF THE INVENTION

The invention provides a numerical control apparatus for machine tool, comprising: an NC program storage portion for storing an NC program generated for machining a material into a desired shape; a transformer means for performing an optimizing process for analyzing the contents of the NC program and parameters set in the machine tool and transforming the NC program so that operation designated by the contents of the NC program and the parameters can be carried out in an optimum condition; an optimized program generated by the transformer means containing an optimized main program and optimized data; a first optimized data storage portion for storing and holding the optimized data used when the machine tool is operated on the basis of the optimized program; and a second optimized data storage portion for storing and holding the optimized data used when the machine tool is operated on the basis of the optimized program, wherein while the machine tool is operated on the basis of the optimized program, the transformer means can generate new optimized data on the basis of the NC program as a transformation source of the optimized program used for operating the machine tool on the basis of the optimized data stored in one of the first and second optimized data storage portions and can write the transformed data in the other of the first and second optimized data storage portions.

Preferably, in the numerical control apparatus for machine tool, the transformer means includes: a currently operative data detection means for detecting currently operative data of the optimized data used for operating the machine tool; a first data replacement means through which data already used for machining before the currently operative data detected by the currently operative data detection means are replaced by corresponding data after transformation; a machining completion judgment means for judging whether machining due to the currently operative data detected by the currently operative data detection means is completed or not; a second data replacement means through which the currently operative data are replaced by corresponding data after transformation when the machining completion judgment means decides completion of machining; and a data replacement completion judgment means for judging whether replacement of all data is completed or not.

Preferably, in the numerical control apparatus for machine tool, the transformer means includes: a re-transformation completion judgment means for judging completion of re-transformation which is executed to obtain re-transformed optimized data while the machine tool is operated on the basis of the optimized data; a one-cycle stop means for shifting the operated machine tool into a one-cycle stop state for stopping only the operation of controlling a control axis after completion of re-transformation is decided by the re-transformation completion judgment means; and an operation restart means for restarting the operation of controlling the control axis of the machine tool after the one-cycle stop, and wherein data transfer between the first and second optimized data storage portions is performed during the one-cycle stop.

Preferably, in the numerical control apparatus for machine tool, the transformer means includes: a re-transformation completion judgment means for judging completion of re-transformation which is executed to obtain re-transformed optimized data while the machine tool is operated on the basis of the optimized data; a one-cycle stop means for shifting the operated machine tool into a one-cycle stop state for stopping only the operation of controlling a control axis after completion of re-transformation is decided by the re-transformation completion judgment means; an operation restart means for restarting the operation of controlling the control axis of the machine tool after the one-cycle stop; and an optimized data storage portion number rewrite means by which an optimized data storage portion number set for the optimized main program's referring to the optimized data during the one-cycle stop is rewritten to the number of the optimized data storage portion in which the transformed optimized data are stored.

The invention also provides a numerical control apparatus for machine tool, comprising: an electronic cam data table provided so that data indicating command positions on a control axis relative to positions on a reference axis are stored and held in accordance with a workpiece to be machined; an electronic cam control means for reading the data corresponding to a detected value on the reference axis and executing an electronic cam program for controlling the movement on the control axis as an objective; a tool cutting edge position correction input means for inputting a correction value of the position of a cutting edge of a tool; and a correction storage means for storing and holding the correction value, wherein the numerical control apparatus further comprises : an NC program storage portion for storing and holding an NC program to be transformed into the electronic cam program; a transformer means for reading the tool cutting edge position correction value from the correction storage means and transforming the NC program into the electronic cam program on the basis of the tool cutting edge position correction value in parallel with electronic cam control during execution of the electronic cam control; a transformation command means for inputting a command to the numerical control apparatus to make the transformer means execute transformation; a re-transformation completion detection means for detecting completion of the transformer means' transformation of the NC program and the tool cutting edge position correction value into the electronic cam data table after the transformation command means gives the transformation command; and a replacement means for replacing data on the electronic cam data table by data after re-transformation when completion of re-transformation is detected by the re-transformation completion detection means.

### BRIEF DESCRIPTION OF THE DRAWINGS

The present invention may be more readily described with reference to the accompanying drawings:
Fig. 1 is a block diagram showing the system configuration of a machine tool according to a first embodiment of the invention.
Fig. 2 is a flow chart showing the operating form of a programmed operation in the numerical control apparatus for machine tool according to the embodiment of the invention.
Fig. 3 is a flow chart showing the operating form of a programmed operation in the numerical control apparatus for machine tool according to the embodiment of the invention.
Fig. 4 is a view showing the outline of an optimized main program and optimized data used in the numerical control apparatus for machine tool according to the embodiment of the invention.
Fig. 5 is a flow chart showing a specific process of program selection and optimization executed in the numerical control apparatus for machine tool according to the embodiment of the invention.
Fig. 6 is a flow chart for specifically explaining an optimizing process executed in the process of program selection and optimization executed in the numerical control apparatus for machine tool according to the embodiment of the invention.
Figs. 7A and 7B are flow charts showing partially modified examples of the flow chart showing the specific process of program selection and optimization executed in the numerical control apparatus for machine tool according to the embodiment of the invention.
Fig. 8 is a flow chart showing a specific process of program selection and optimization executed in a numerical control apparatus for machine tool according to a second embodiment of the invention.

### DETAILED DESCRIPTION OF THE PREFERRED EMBODIMENTS

Preferred embodiments of the invention as to a numerical control apparatus for machine tool will be described below in detail with reference to the drawings.

A first embodiment will be described first.

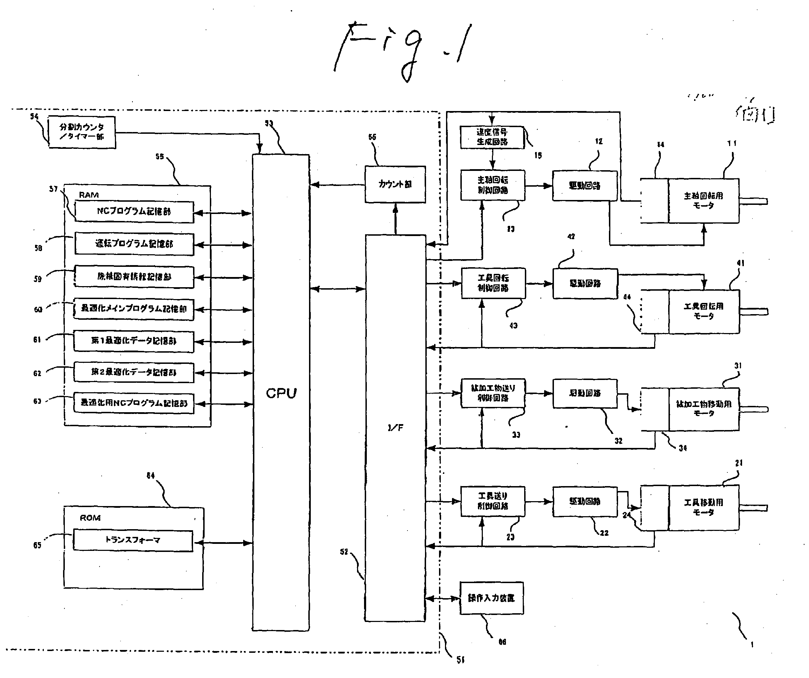

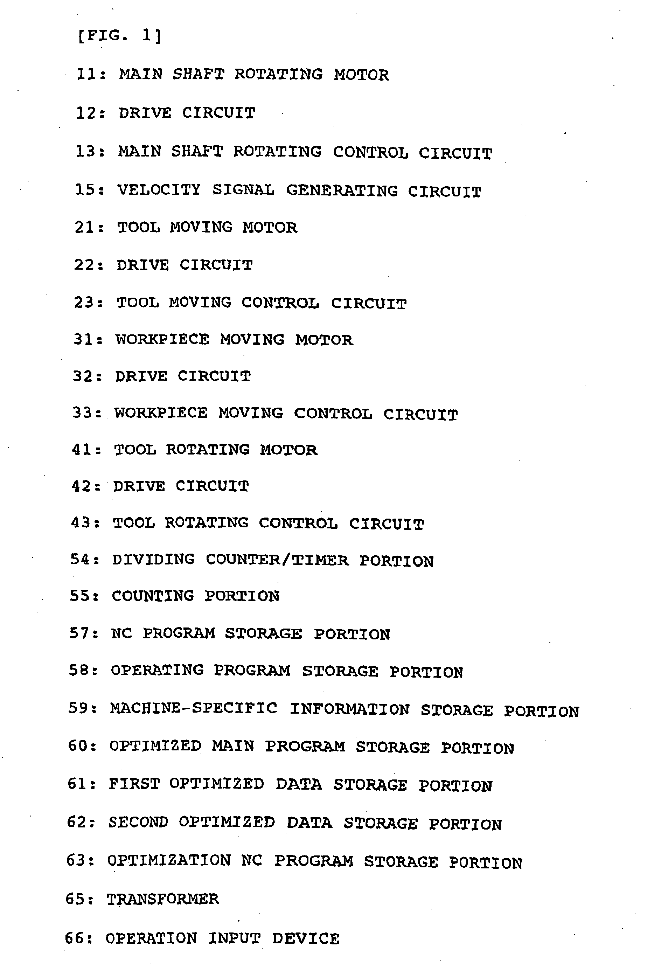

Fig. 1 is a block diagram showing the configuration of a numerical control machine tool according to an embodiment of the invention. In Fig. 1, the machine tool 1 includes a main shaft rotating motor 11, a tool moving motor 21, a workpiece moving motor 31, a tool rotating motor 41, and a control unit portion 51 for controlling drives of the motors 11, 21, 31 and 41.

The main shaft rotating motor 11 is provided so that a main shaft (not shown) formed so as to be able to hold a workpiece is driven to rotate. The main shaft rotating motor 11 is connected to the control unit portion 51 through a drive circuit 12 and a main shaft rotating control circuit 13. The main shaft rotating motor 11 is provided with a pulse encoder 14 for detecting rotation of the main shaft rotating motor 11. An output of the pulse encoder 14 is connected to the control unit portion 51 and a velocity signal generating circuit 15, so that a rotation detection signal output from the pulse encoder 14 is supplied to the control unit portion 51 and the velocity signal generating circuit 15. The pulse encoder 14 generates a rotation detection signal in synchronism with the rotation of the main shaft rotating motor 11 (main shaft) and supplies the rotation detection signal to the control unit portion 51 and the velocity signal generating circuit 15. The velocity signal generating circuit 15 converts the rotation detection signal output from the pulse encoder 14 into a main shaft rotation velocity signal expressing the rotational velocity of the main shaft rotating motor 11 (main shaft). An output of the velocity signal generating circuit 15 is connected to the main shaft rotating control circuit 13, so that the main shaft rotation velocity signal obtained by conversion is supplied to the main shaft rotating control circuit 13.

The main shaft rotating control circuit 13 is provided for controlling the rotation of the workpiece (main shaft) by referring to a clock signal generated/output from a clock signal generating circuit (which will be described later) so that the workpiece (main shaft) can rotate at a desired rotational velocity. The main shaft rotating control circuit 13 compares the main shaft rotation velocity signal output from the velocity signal generating circuit 15 with a main shaft rotation velocity command signal output from the control unit portion 51 through an I/F portion 52 and generates a control signal corresponding to the difference between the main shaft rotation velocity signal and the main shaft rotation velocity command signal by referring to the clock signal. The control signal generated by the main shaft rotating control circuit 13 is supplied to the drive circuit 12.

The drive circuit 12 controls electric power supplied to the main shaft rotating motor 11 on the basis of the control signal output from the main shaft rotating control circuit 13 so that the rotational velocity of the main shaft rotating motor 11 (main shaft) is set at a main shaft rotation velocity command value which will be described later. The drive circuit 12, the main shaft rotating control circuit 13 and the velocity signal generating circuit 15 form a feedback control system for feeding back the rotational velocity of the main shaft rotating motor 11 (main shaft).

Next, the tool moving motor 21 is provided so that a tool (such as a turning cutter or a rotary tool (a drill, a tap, etc.) for machining the workpiece) is moved, for example, in directions (X-axis direction or Y-axis direction) perpendicular to the rotation center axis of the main shaft rotating motor 11 (main shaft) and in an axial direction (Z-axis direction). The tool movingmotor 21 is connected to the control unit portion 51 through a drive circuit 22, a tool moving control circuit 23 and the I/F portion 52. The tool moving motor 21 is provided with a pulse encoder 24 for detecting the rotation of the tool moving motor 21. An output of the pulse encoder 24 is connected to the tool moving control circuit 23, so that a rotation detection signal output from the pulse encoder 24 is supplied to the tool moving control circuit 23. The pulse encoder 24 generates a rotation position signal at intervals of a predetermined rotation angle of the tool moving motor 21 and supplies the rotation position signal to the tool moving control circuit 23.

The tool moving control circuit 23 recognizes the actual position of the moved tool on the basis of the rotation position signal output from the pulse encoder 24. At the same time, the tool moving control circuit 23 compares the recognized actual position of the moved tool with a tool position command signal (which will be described later) output from the control unit portion 51 through the I/F portion 52 and generates a tool drive signal on the basis of a result of the comparison. The tool drive signal generated by the tool moving control circuit 23 is supplied to the drive circuit 22. The drive circuit 22 controls electric power supplied to the tool moving motor 21 on the basis of the tool drive signal output from the tool moving control circuit 23. The drive circuit 22 and the tool moving control circuit 23 form a feedback control system for feeding back the position of the moved tool.

The workpiece moving motor 31 is provided for moving the workpiece, for example, in a direction (Z-axis direction) parallel to the rotation center axis of the main shaft rotating motor 11 (main shaft). The workpiece moving motor 31 is connected to the control unit portion 51 through a drive circuit 32, a workpiece moving control circuit 33 and the I/F portion 52. The workpiece moving motor 31 is provided with a pulse encoder 34 for detecting the rotation of the workpiece moving motor 31. An output of the pulse encoder 34 is connected to the workpiece moving control circuit 33, so that a rotation detection signal output from the pulse encoder 34 is supplied to the workpiece moving control circuit 33. The pulse encoder 34 generates a rotation detection signal at intervals of a predetermined rotation angle of the workpiece moving motor 31 and supplies the rotation detection signal to the workpiece moving control circuit 33.

The workpiece moving control circuit 33 recognizes the actual position of the moved workpiece on the basis of the rotation detection signal output from the pulse encoder 34. At the same time, the workpiece moving control circuit 33 compares the recognized actual position of the moved workpiece with a workpiece position command signal output from the control unit portion 51 through the I/F portion 52 and generates a workpiece drive signal on the basis of a result of the comparison. The workpiece drive signal generated at intervals of the predetermined rotation angle is supplied to the drive circuit 32. The drive circuit 32 controls electric power supplied to the workpiece moving motor 31 on the basis of the workpiece drive signal output at intervals of the predetermined rotation angle. The drive circuit 32 and the workpiece moving control circuit 33 form a feedback control system for feeding back the position of the moved workpiece.

The tool rotating motor 41 for rotating a rotary tool provided in the aforementioned tool is provided for driving the rotary tool such as a drill, a tap or a milling cutter to rotate. The tool rotating motor 41 is connected to the control unit portion 51 through a drive circuit 42 and a tool rotating control circuit 43. The tool rotating motor 41 is provided with a pulse encoder 44 for detecting the rotation of the motor 41. An output of thepulse encoder 44 is connected to the control unit portion 51 through the I/F portion 52, so that a rotation detection signal output from the pulse encoder 44 is supplied to the control unit portion 51. The pulse encoder 44 generates a rotation detection signal in synchronism with the rotation of the tool rotatingmotor 41 and supplies the rotation detection signal to the control unit portion 51.

The tool rotating control circuit 43 is provided for controlling the rotation of the rotary tool by referring to the signal output from the pulse encoder 44 so that the rotary tool can rotate at a desired rotational velocity. The tool rotating control circuit 43 compares the signal output from the pulse encoder 44 with a tool rotation velocity command signal output from the control unit portion 51 and generates a control signal corresponding to the difference between the two signals by referring to the clock signal. The control signal generated by the tool rotating control circuit 43 is supplied to the drive circuit 42.

The drive circuit 42 controls electric power supplied to the tool rotating motor 41 on the basis of the control signal output from the tool rotating control circuit 43 so that the rotational velocity of the tool rotating motor 41 is set at a tool rotation velocity command value. The drive circuit 42, the tool rotating control circuit 43 and the pulse encoder 44 form a feedback control system for feeding back the rotational velocity of the tool rotating motor 41.

As shown in Fig. 1, the control unit portion 51 has a CPU 53, a dividing counter/timer portion 54, an ROM 64, and a counting portion 55. The CPU 53 is a computing portion that conducts signal processing in the control unit portion 51 as a whole. The counting portion 55 is connected to the I/Fportion 52. The rotation detection signal output from the pulse encoder 14 or 44 is supplied to the counting portion 55 through the I/F portion 52. The counting portion 55 is formed to count the number of times in occurrence of the rotation detection signal supplied to the counting portion 55. The counting portion 55 is also connected to the CPU 53. The counting portion 55 is also formed so that a result of counting of the number of times in occurrence of the rotation detection signal output from the pulse encoder 14 or 44 is supplied to the CPU 53. The dividing counter/timer portion 54 is formed to generate/output a timing signal with a predetermined cycle, for example, of 4 msec. The 4 msec-cycle timing signal generatedby the dividing counter/timer portion 54 is supplied to the CPU 53.
Incidentally, the cycle of the timing signal is not limited to 4 msec as described above. That is, the cycle of the timing signal can be selected suitably in accordance with the processing power of the CPU 53, the resolving power of the pulse encoder 14, the performance of each of the motors 11, 21, 31 and 41, and so on.

The control unit portion 51 further has an RAM 56. The RAM 56 has an NC program storage portion 57, an operating program storage portion 58, a machine-specific information storage portion 59, an optimized main program storage portion 60, a first optimized data storage portion 61, a second optimized data storage portion 62, and an optimizing NC program storage portion 63. The RAM 56 is formed so readably/writably that results of various arithmetic operations in the CPU 53 can be temporarily stored.

The NC program storage portion 57 is an area for storing a plurality of NC programs for machining various workpieces respectively so that an NC program can be selected in accordance with the workpiece used. When an operation input device 66 is operated to make access to the storage area, a desired machining NC program can be selected.

The operating program storage portion 58 is an area for storing an NC program for actually operating the machine tool 1 or only an optimized main program in an optimized program (as a combination of an optimized main program and optimized data) obtained by an optimizing process. That is, when the machine tool 1 is to be operated by an NC program, selected one of NC programs stored in the NC program storage portion 57 is loaded into the operating program storage portion 58 or an NC program generated through a monitor provided on an NC operation panel (not shown) is directly loaded into this area. On the other hand, when the machine tool 1 is to be operated by an optimized program, only an optimized main program contained in the optimized program is loaded into the operating program storage portion 58.

The machine-specific information storage portion 59 is an area provided for storing the offset value of each tool, the length of a product and other parameters.

The optimized main program storage portion 60 is an area for initially storing an optimized main program contained in an optimized program (as a combination of an optimized main program and optimized data) transformed/generated by a transformer 65 as a program stored in the ROM 64. After once stored in the optimized main program storage portion 60, the optimized main program is loaded into the operating program storage portion 58 as it is. Although here is shown the case where the optimized main program storage portion 60 is set as an area on the RAM 56, it is more preferable that the optimized main program storage portion 60 is set as an area on an external storage device such as an HDD. This is because the optimized main program can be stored as a backup program so that the optimized main program can be loaded into the operating program storage portion 58 as it is.

The first optimized data storage portion 61 is an area for storing optimized data generated when an NC program is transformed by the transformer 65 as described above. In this example, when the program loaded into the operating program storage portion 58 is an optimized main program, the optimized data stored in the first optimized data storage portion 61 is referred to. Electronic cam data can be taken as a specific example of the optimized data. In this case, because the optimized main program contains commands for executing electronic cam control, the first optimized data storage portion 61 is an area for storing data referred to by the commands. Incidentally, electronic cam control is as follows. A data table for indicating correspondence of position data with respect to a reference axis is provided. The CPU 53 reads position data from the table in accordance with change of the reference axis (the accumulated rotational velocity or rotation angle of the main shaft or the time axis in this case) , decides a command position and supplies a position command to each control axis to thereby perform position control. Other examples of the optimized program will be described later.

In this example, the second optimized data storage portion 62 is an area for storing optimized data obtained when the optimized program currently used for operating the machine tool 1 is transformed again. That is, if both transformation and operation are executed concurrently by the CPU 53 when the optimized program currently in operation is newly changed over to a program transformed on the basis of an NC program stored in the optimization NC program storage portion 63 and updated data stored in the machine-specific information storage portion 59, it is impossible to secure a region for storing optimized data after transformation. That is, optimized data newly obtained by transformation must be loaded after optimized data used for operating the machine tool 1 are once erased from the storage portion. Accordingly, optimized data used for operating the machine tool 1 are absent at the moment between erasure of old optimized data and loading of new optimized data. As measures against this problem, the second optimized data storage portion 62 is provided.

The optimization NC program storage portion 63 is an area provided for storing NC programs that have been already used for transformation and that are prepared for re-transformation. The transformer 65 cannot perform re-transformation by using the optimized main program and the optimized data when an optimized main program and optimized data are to be newly generated by transformation due to the transformer 65. Therefore, NC programs that have been already used for transformation are stored in the optimization NC program storage portion 63.

The ROM 64 is a storage portion for storing various kinds of processing programs inclusive of the transformer 65. Commands used for electronic cam control are also stored in the ROM 64.

The I/F portion 52 supplies a workpiece position command signal to the workpiece moving control circuit 33. The workpiece position command signal indicates the position of the moved workpiece decided by the CPU 53 as will be described later. The I/F portion 52 also supplies a tool position command signal to the tool moving control circuit 23. The tool position command signal indicates the position of the moved tool decided by the CPU 53. The I/F portion 52 further supplies a main shaft rotational velocity command signal to the main shaft rotating control circuit 12. The main shaft rotational velocity command signal indicates the rotational velocity of the main shaft computed and decided by the CPU 53. The I/F portion 52 serves also as a signal input/output portion through which rotation detection signals output from the pulse encoders 14, 24, 34 and 44 respectively are input to the CPU 53 and the counting portion 55.

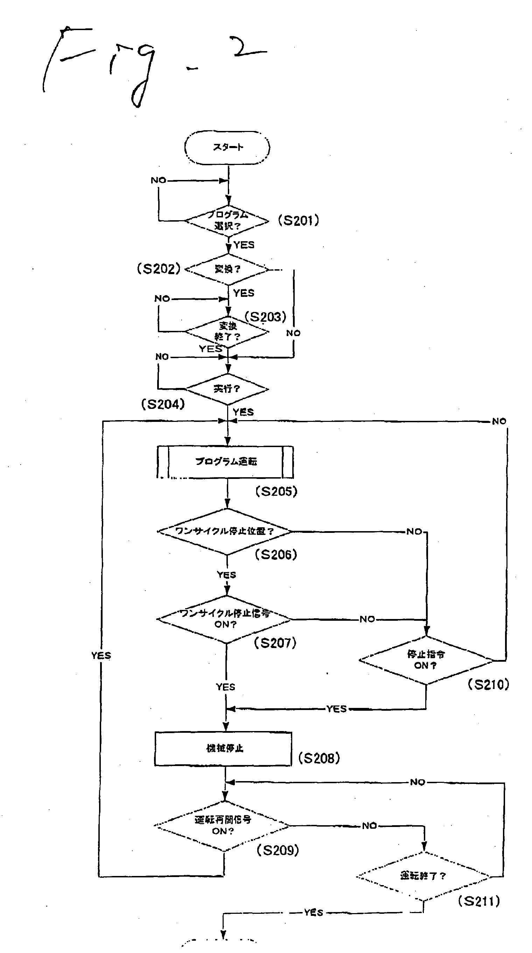

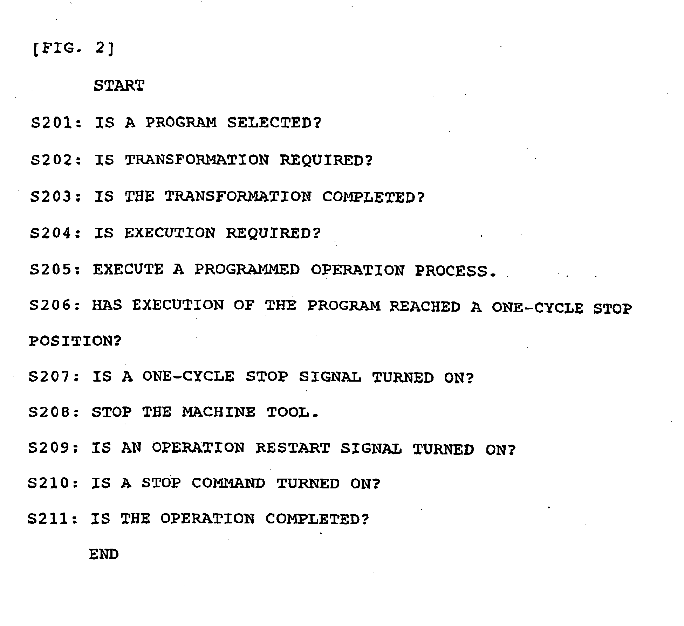

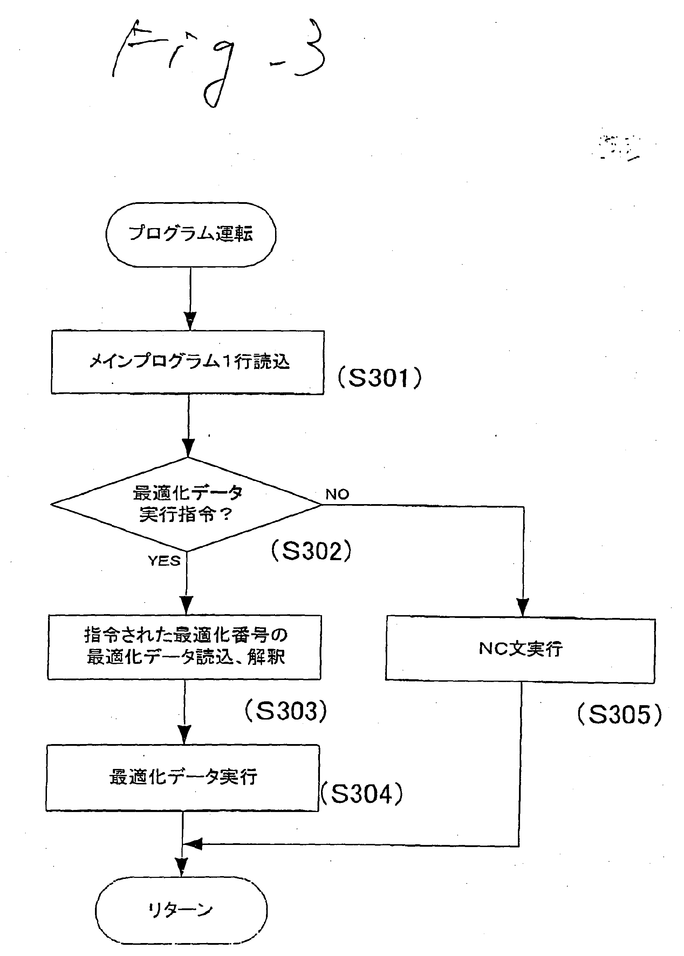

Next, a process executed by the control unit 51 will be described with reference to Fig. 2 which is a flow chart.

The machine tool 1 has: an automatic operation mode in which the machine tool 1 is operated by a program; a manual operation mode in which the machine tool 1 is operated by use of various kinds of buttons on a numerical control operation panel (not shown) ; and an edition mode in which an NC program or the like is edited.

First in S201, a judgment is made as to whether a program is selected. The program selection in S201 is based on the viewpoint as to which of NC programs stored in the NC program storage portion 57 has to be used for executing machining. Therefore, a judgment is made as to whether program selection is completed or not. Then, in S202, a judgment is made as to whether a request to transform/optimize the selected NC program is issued on the numerical control operation panel or not. When the judgment gives "YES", transformation is executed on the basis of the transformation request in S202. The current position of the process goes to S203 in accordance with the judgment of "YES". In S203, a judgment is made as to whether transformation is completed or not. While transformation is not completed, the step S203 is repeated. When the judgment in S202 gives "NO" or when the judgment in S203 gives "YES", the current position of the process goes to S204. In S204, a judgment is made as to whether an input for executing a programmed operation is issued on the numerical control operation panel or not. While the execution input is not issued, the step S204 is repeated. When the input is issued, the current position of the process goes to S205. In S205, a programmed operation process is executed. The programmed operation process will be described later in detail.

Then, in S206, a judgment is made as to whether execution of the program reaches a one-cycle stop position or not. The term "one-cycle stop" means a state in which a process for reading and executing a next block of the NC program stops when execution of the NC program reaches a position of description of an NC code expressed by M20 or the like, that is, while rotation of the main shaft, supply of cutting oil and lubricating oil, rotation of a rotary tool, etc. in the machine tool 1 are held. Specifically, for example, the operation of a shaft for controlling the movement of a tool post is stopped.
Incidentally, the machine tool 1 does not go into a one-cycle stop state when M20 is judged in S206, that is, the machine tool 1 goes into a one-cycle stop state first when a decision that a one-cycle stop signal is turned on is made in S207. The one-cycle stop signal serves as a parameter which is set by a setting operation on the numerical control operation panel and which expresses the attribute of the program in the programmed operation mode. That is, the one-cycle stop signal is a switch which can be turned on/off by a predetermined operation on the numerical control operation panel.
Incidentally, in the invention, the switch is turned on in synchronism with execution of a process for transforming an NC program. This point will be described later.

When a decision that the one-cycle stop command is not issued is made in S206 or when a decision that the one-cycle stop signal is turned off is made in S207, a judgment is made in S210 as to whether the stop command is on or not. That is, in S210, a judgment is made as to whether a button operation for performing a feed hold operation is made on the numerical control operation panel or not. While the judgment in S210 gives "NO", the steps S205 to S207 are repeated. The "feed hold" is a command for stopping the movement of a shaft.
According to the "feed hold" command, for example, only the movement of a tool post is stopped.

When the judgments in S206 and S207 give "YES", the step S208 is executed so that the machine tool 1 goes into the one-cycle stop state.

Then, when an operation restart signal is judged in S209, the judgment gives "YES" and the steps S205 to S207 are executed again. When the judgment in S206 or S207 gives "NO", a judgment is made as to whether an operation for requesting termination of the operation is made on the numerical control operation panel or not. When a signal for requesting termination of the operation is input, a process for terminating the programmed operation is performed. When the signal is not input, the judgment in S209 is made again.

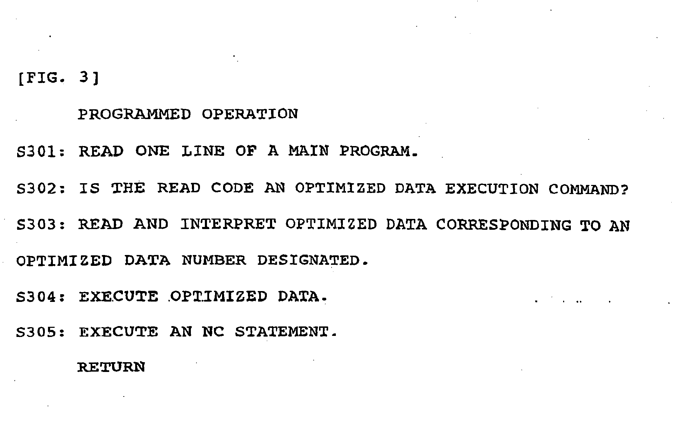

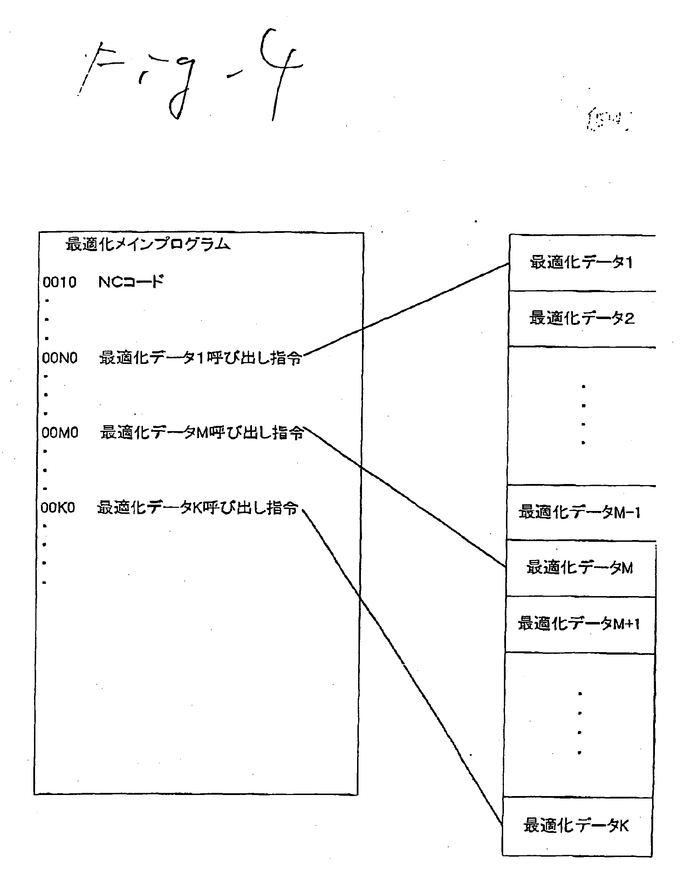

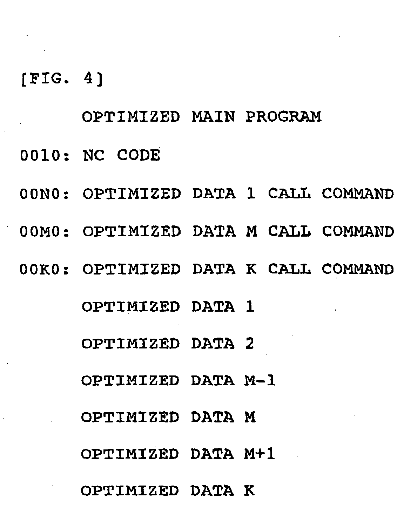

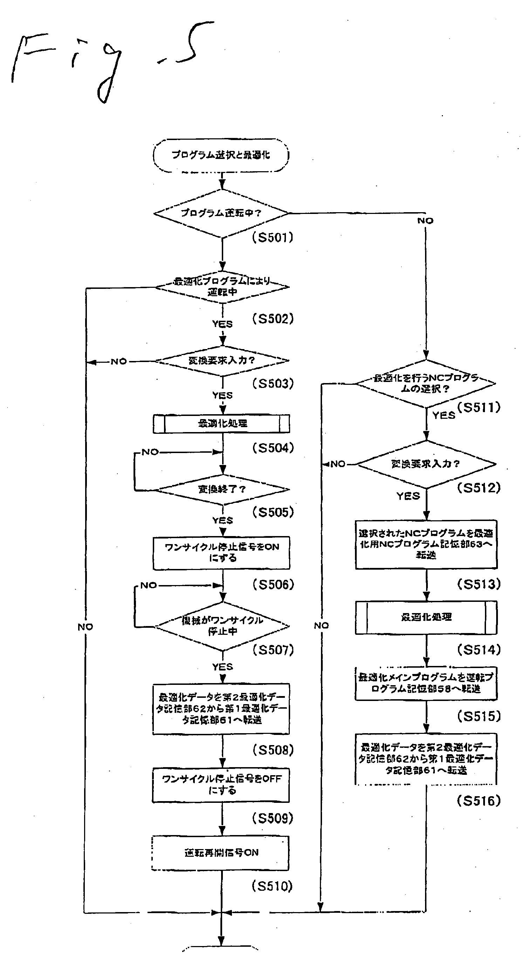

The programmed operation process in S205 will be described more in detail with reference to Figs. 3 and 4.

When the current position of the routine goes to S205 in Fig. 2, a sub-routine shown in Fig. 3 is carried out as the programmed operation process. First, in S301, one line is read from the main program described as NC codes or optimized data execution commands written in blocks represented by 0010, 00N0, 00M0 and 00K0 in Fig. 4. When this step S301 is executed, the contents of the code are interpreted in the numerical control apparatus so that a process is carried out according to a result of the interpretation.

Then, in S302, a judgment is made as to whether the read code is an optimized data execution command or not.

When this judgment gives "YES", the current position of the routine goes to S303. In S303, optimized data M set and stored in accordance with an optimized data M call command generated as a process accompanying the optimized data execution command as shown in Fig. 4 is read and interpreted.

In S304, the optimized data M is executed on the basis of the interpretation in S303. Specifically, when this step S304 is carried out, the position of a cutting edge of a cutter (such as a cutting tool or a rotary tool) provided in a tool post is moved to a desired position designated by the optimizing program or the 2-axis direction position of the workpiece is moved to a desired position designated by the program.

Incidentally, when the judgment in S302 gives "NO", an NC statement as used in an ordinary NC apparatus is executed. The optimized data call command may be provided as a command for calling a plurality of optimized data successively.

Next, a program transforming process concerning the feature of the invention will be described.

First, the control unit 51 performs a numerical control process to execute a programmed operation of the machine tool 1 to thereby control movements of a tool, a workpiece, etc. On the other hand, the CPU 53 of the control unit 51 performs a time-division process in which an NC program can be transformed into an optimized main program and optimized data. In this manner, the surplus capacity of the CPU 53 is used so that program transformation can be made during the programmed operation of the machine tool 1. Incidentally, it is a matter of course that program transformation can be also executed when the programmed operation is not carried out.

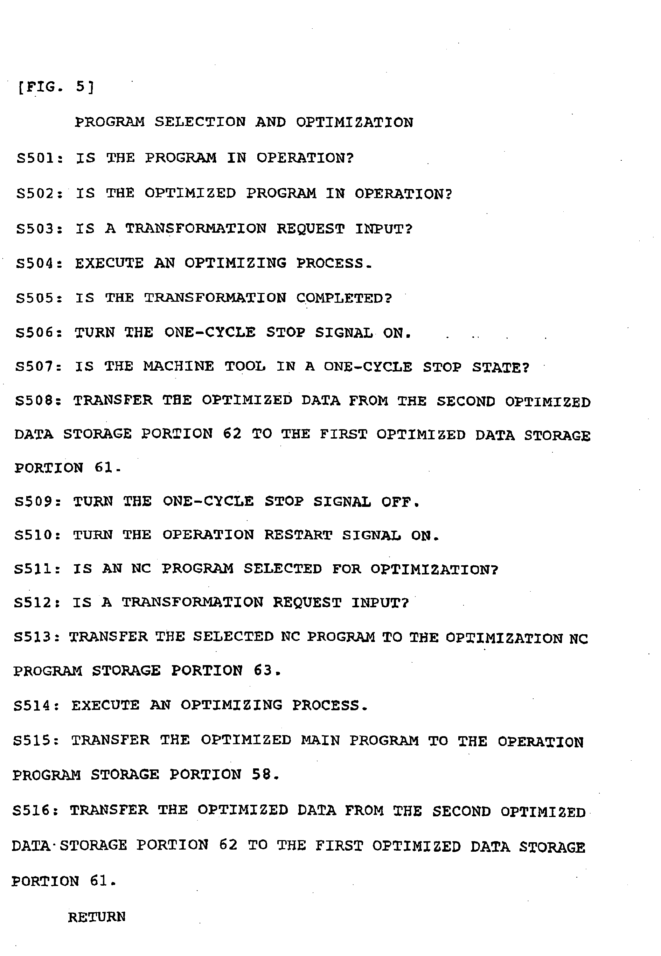

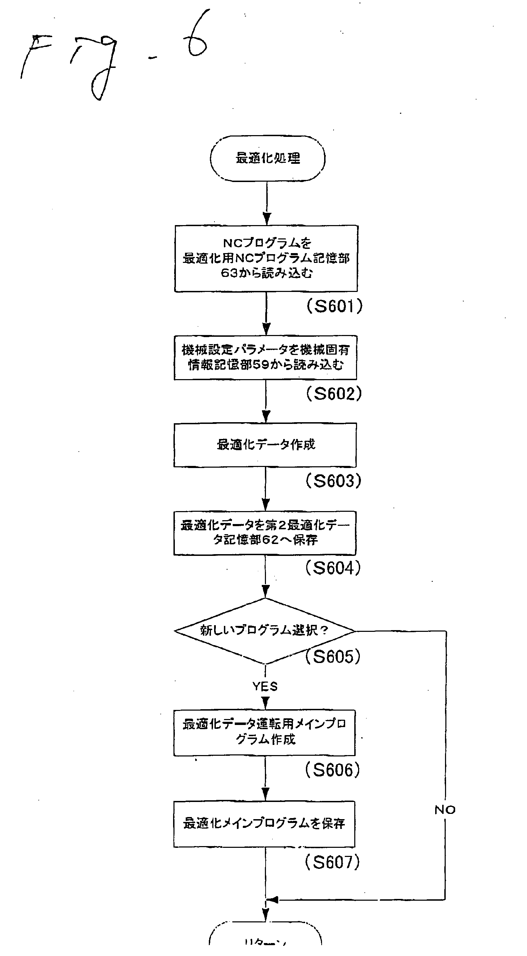

How to execute program transformation will be described with reference to Fig. 5.

First, in S501, a judgment ismade as to whether the machine tool 1 is in programmed operation or not. When this judgment gives "YES", the current position of the routine goes to S502 in which a judgment is further made as to whether the machine tool 1 is in operation based on the optimized program or not. When the judgment gives "NO" indicating that the machine tool 1 is not in operation based on the optimized program, the current position of the routine returns without anything to be done. When the judgment gives "YES", the current position of the routine goes to S503 in which a judgment is made as to whether a transformation request input to request re-transformation of the currently executed optimized program is issued from the operation input device 66 or not. When the judgment gives "NO", the current position of the routine returns without anything to be done. When the judgment gives "YES", the current position of the routine goes to S504 in which the NC program as a source of the currently executed optimized program is read from the optimization NC program storage portion 63 and optimized again. This optimizing process will be described later. After the optimizing process, the current position of the routine goes to S505 in which a judgment is made as to whether transformation due to the optimizing process is completed or not. The step S505 is looped so that the current position of the routine does not go from S505 to the next step unless transformation is completed. When transformation is completed, the current position of the routine goes to S506 in which the one-cycle stop signal is turned on. When the one-cycle stop signal is turned on, the machine tool 1 is kept in operation except that the operation of the tool post is stopped as described above. After the step S506, the current position of the routine goes to S507 in which a judgment is made as to whether the machine tool 1 is in a one-cycle stop state or not. This step S507 is also looped so that the current position of the routine does not go to the next step while the judgment in S507 gives "NO". When the judgment in S507 gives "YES", the current position of the routine goes to S508 in which the optimized data are transferred from the second optimized data storage portion 62 to the first optimized data storage portion 61. After the step S508, the current position of the routine goes to S509 in which the one-cycle stop signal is turned off. After the step S509, the current position of the routine goes to S510 in which the operation restart signal is turned on to restart the operation of the machine tool 1.

On the other hand, when the judgment in S501 gives "NO", the current position of the routine goes to S511 in which a judgment is made as to whether an NC program to be optimized is selected or not. When the judgment gives "NO" indicating that the NC program is not selected, the current position of the routine returns without anything to be done. When the judgment gives "YES" indicating that the NC program is selected, the current position of the routine goes to S512 in which a judgment is made as to whether a transformation request input is given on the operation panel of the numerical control apparatus or not. When the judgment gives "NO", the current position of the routine returns without anything to be done. When the judgment gives "YES", the current position of the routine goes to S513 in which the selected NC program is transferred to the optimization NC program storage portion 63. After the step S513, the current position of the routine goes to S514 in which an optimizing process is executed. The optimizing process will be described later. After the optimizing process is completed, the current position of the routine goes to S515 in which the optimized main program stored in the optimized main program storage portion 60 is transferred to the operation program storage portion 58. After the step S515, the current position of the routine goes to S516 in which the optimized data are transferred from the second optimized data storage portion 62 to the first optimized data storage portion 61.

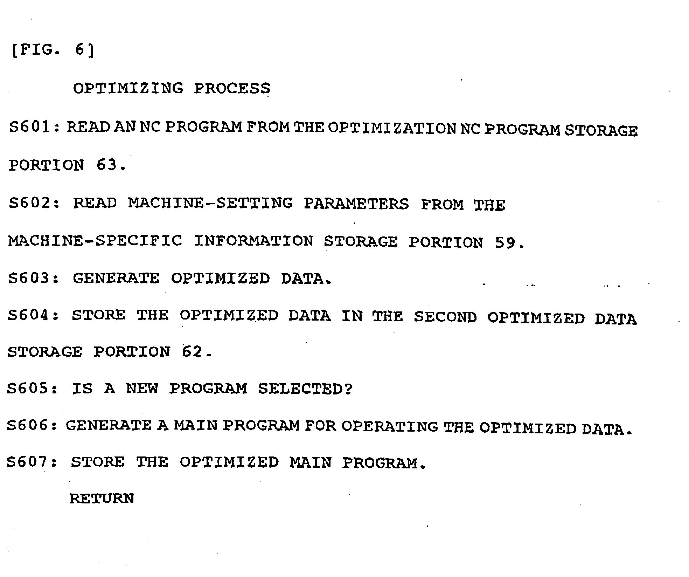

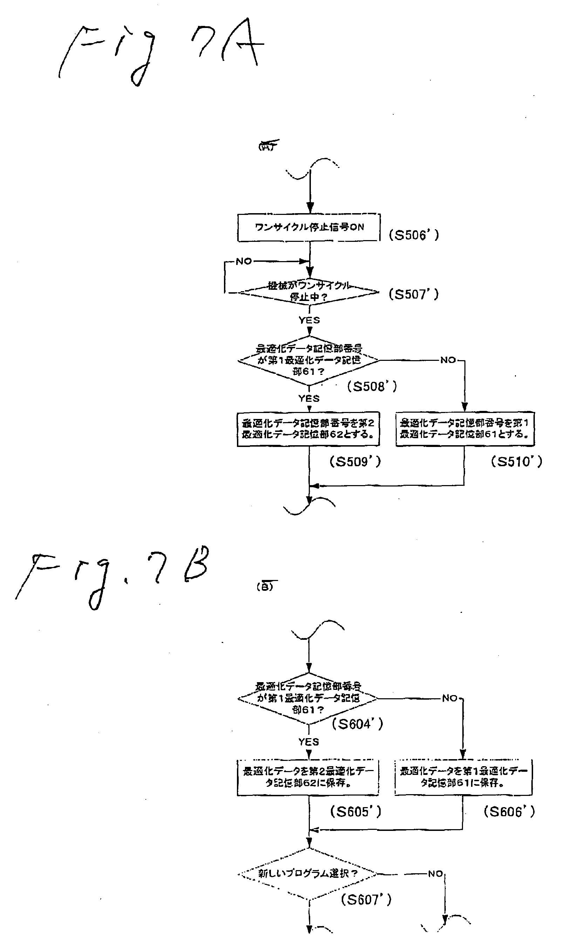

The specific contents of the optimizing process will be described in detail with reference to Fig. 6.

The optimizing process per se is a process that is carried out when the transformer 56 is read from the ROM 64 to the RAM 56 and executed. First, in S601, an NC program is read from the optimization NC program storage portion 63. The NC program is read into an area reserved by the transformer loaded into a work area set on the RAM 56. The transformer executes a predetermined process for data of the NC program loaded on the RAM 56. When the current position of the routine goes to S602, machine-setting parameters are read from the machine-specific information storage portion 59. The data are read into the area allocated by the transformer. In S603, the transformer generates optimized data on the basis of the data read by the steps S601 and S602. In this embodiment, the optimized data are provided as a table which is obtained so that correspondence of the positions of the moved workpiece and tool to the reference axis is formed to be referred to by electronic cam commands. In step S604, the table obtained by generation of the optimized data is stored as optimized data in the second optimized data storage portion 62. Then, in step S605, a judgment is made as to whether a new NC program is selected or not. That is, in S605, a judgment can be made as to whether the NC program used for generating the optimized data has been already transformed or not. When the judgment gives "NO", that is, when the NC program is old, the current position of the routine returns without anything to be done and the optimizing process is terminated. When the judgment gives "YES", that is, when the NC program is new, the current position of the routine further goes to S606 inwhich an optimized main program used for referring to the optimized data is generated as shown in Fig. 4. When the current position of the routine goes to S607, the optimized main program generated by S606 is stored in the optimized main program storage portion 60. After the step S607, the optimizing process is terminated.

The function achieved by Figs. 5 and 6 will be described.

When a re-transformation request input judged by S503 is issued on the operation panel of the numerical control apparatus while the machine tool 1 is in programmed operation, the optimized program currently in operation is re-transformed.

The optimizing process is carried out, so that an optimized main program and optimized data are generated on the basis of the NC program and machine parameters (offsets). Specifically, an electronic cam data table is generated as the optimized data. Respective data as control axis position commands in the electronic camdata table generated in this manner are calculated and obtained as data of points indicating a locus of movement of a tool on which tool cutting edge position correction values obtained as machine-specific information in S602 are reflected.

Because a lot of calculations are required of the optimizing process, a considerable deal of time is required for generating the optimized main program and optimized data on the basis of the original NC program. In this embodiment, the optimized data are once stored in the second optimized data storage portion 62 so that there is no influence on the programmed operation of the machine tool 1. While the machine tool 1 is in programmed operation, data stored in the operation program storage portion 58 and the first optimized data storage portion 61 are referred to by firmware of the numerical control apparatus. Accordingly, even in the case where data stored in other storage regions are renewed, there is no influence on the programmed operation of the machine tool 1.

In this manner, the optimizing process is carried out so that the optimized data are renewed. In S505, a judgment is made as to whether transformation of the optimized data is completed or not. After completion of transformation, in S506, the one-cycle stop signal is turned on in order to once stop the operation of the machine tool 1. Turning the one-cycle stop signal on is set as one process of the program optimizing routine so that the optimizing process can be carried out in a series of machining processes. This is for the purpose of preventing the operating state of the machine tool 1 from being abnormal when data as a result of the optimizing process are transferred from the second optimized data storage portion 62 to the first optimized data storage portion 61. Because the machine tool 1 is operated by referring to the first optimized data storage portion 61, it is necessary to set data in the first optimized data storage portion 61 normally while the machine tool 1 is in operation. That is, it is necessary to stop access to the first optimized data storage portion 61 in order to transfer the data to the first optimized data storage portion 61. It is therefore necessary to once stop the operation of the machine tool 1. For this reason, as one process of the program optimizing routine, the operation of the machine tool 1 must be stopped automatically so that the optimized data stored in the first optimized data storage portion 61 can be renewed in this timing.

On the other hand, a predetermined time is required of the optimizing process as described above. From this point of view, when the transforming process is executed to rewrite the first optimized data storage portion 61 after the operation of the machine tool 1 is stopped, operating efficiency is lowered undesirably because a great deal of time is required for executing the transforming process in addition to stopping the operation of the machine tool 1. As described above, the surplus capacity of the CPU 53 is however used for performing a time-division process on the background while the machine tool 1 is in operation. Accordingly, at the stage of completion of the optimizing process, the machine tool 1 can be stopped and data stored in the first optimized data storage portion 61 can be renewed. Accordingly, operator's waiting time for the optimizing process can be shortened greatly. In other words, this brings improvement in operating efficiency of the machine tool 1.

The step S509 is further designed as a process of the program optimizing routine so that the one-cycle stop signal turned on automatically by S506 is turned off automatically at the stage of completion of data renewal of the first optimized data storage portion 61. The operation restart signal of the machine tool 1 is turned on as shown in S510 with the turning-off of the one-cycle stop signal, so that the operation of themachine tool 1 can be restarted automatically after the completion of data renewal. In this manner, when the optimizing process is carried out during the operation of the machine tool 1 after the correction value of the position of the cutting edge of the tool used in the machine tool 1 is input on the operation panel of the numerical control apparatus so that the correction value is stored as machine-specific information, the same handling property as in ordinary NC control can be obtained surely because the correction value of the tool can be set as if ordinary NC control were made. In this control mode, the once stop of the machine tool 1 is required for setting the correction value of the tool and performing the optimizing process to reflect the correction value but the stop time and the waiting time for the optimizing process can be shortened. The total time required for machining the workpiece by the machine tool 1 and elongated by the optimizing process can be minimized. When the timing of turning the one-cycle stop signal on is set after the completion of transformation as described above in this embodiment, the period to the timing of NG can be used for minimizing the stop of the operation of the machine tool 1 caused by transformation in the case where prediction is made that the workpiece will be NG with respect to machining tolerance after several cycles judging from the currently machined state.

A modification of this embodiment will be described.

Alternatively, it may be conceived that the timing of turning the one-cycle stop signal on is set before the start of transformation. When the currently machined workpiece has been already out of machining tolerance, a request may be made to set a new tool correction value for the tool of the machine tool 1 immediately to thereby put the workpiece within machining tolerance. As measures to this case, when a transformation request is input in the step S503, an input indicating whether the operation of the machine tool 1 is to be stopped before transformation or after transformation may be requested so that the stop timing of the machine tool 1 can be set on the basis of the input. When setting is made so that the one-cycle stop signal is turned on before transformation, nonsense machining NG in terms of machining tolerance can be prevented from continuing in the period required for transformation.

Another modification of this embodiment will be described.

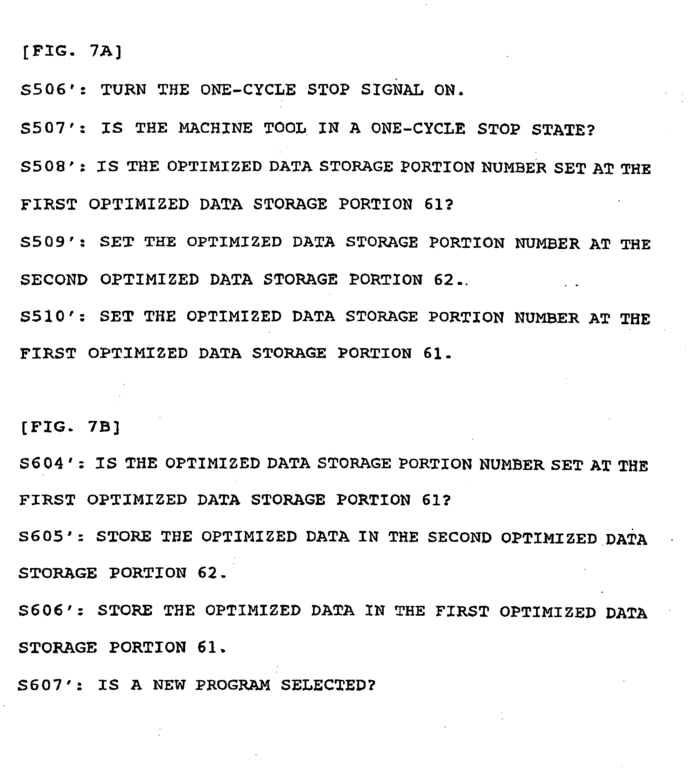

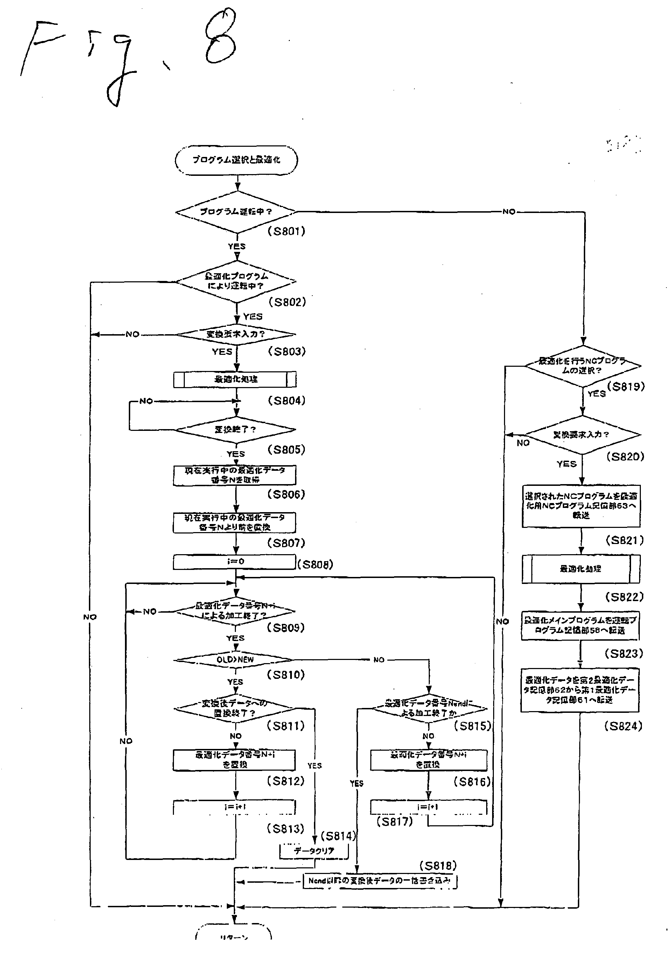

First, a changed portion after S506 in Fig. 5 in the condition that S506 in Fig. 5 is used as S506' without any change will be described with reference to Fig. 7A.

In S506', the CPU 53 executes signal processing for outputting the one-cycle stop signal through the I/F 52 in the same manner as in Fig. 5 to turn on the one-cycle stop switch provided in the control unit 51. In S507' , a judgment is made as to whether the machine tool 1 has been made to go into a one-cycle stop state by the signal processing in S506' or not. While the judgment gives "NO", the step S507' is repeated. When the judgment gives "YES", the current position of the routine goes to S508' in which a judgment is made as to whether the optimized data storage portion number indicates the first optimized data storage portion 61 or not. Incidentally, the optimized data storage portion number is stored as data in a destination to be referred to by the optimized main program during the operation of the machine tool 1, that is, the optimized data storage portion number indicates a data storage destination set in a storage region used for the optimized main program's referring to the optimized data. When the judgment gives "YES", the current position of the routine goes to S509' in which the optimized data storage portion number is changed to the second optimized data storage portion 62 so that the second optimized data storage portion 62 is set as a destination in which the optimized main program can refer to the optimized data. When the judgment in S508' gives "NO", the current position of the routine goes to S510' in which the optimized data storage portion number is changed to the first optimized data storage portion 61 so that the first optimized data storage portion 61 is set as a destination in which the optimized main program can refer to the optimized data. Thereafter, the steps after the step S509 of turning the one-cycle stop signal off in Fig. 5 are executed successively.

A portion which must be changed in Fig. 6 in accordance with the modification will be described with reference to Fig. 7B. In step S604' after completion of the optimizing process in S603 in Fig. 6, a judgment is made as to whether the optimized data storage portion number indicates the first optimized data storage portion 61 or not. When the judgment gives "YES", the current position of the routine goes to S605' in which the optimized data are stored in the second optimized data storage portion 62. When the judgment in S604' gives "NO", the current position of the routine goes to S606' in which the optimized data are stored in the first optimized data storage portion 61. After the completion of these optimized data storing steps S605' and S606' , the current position of the routine goes to S607' in which a judgment is made in the same manner as in S605 in Fig. 6 as to whether a new program is selected or not. The steps after S607' are the same as in Fig. 6. The description of the steps after S607' will be omitted.

These modifications of the embodiment are configured so that the optimized main program refers to the optimized data on the basis of the optimized data storage portion number. The optimized main program can refer to the optimized data by a simple operation of referring to the optimized data storage portion number stored in a region of the RAM 56 and referring to RAM address data designated by the optimized data storage portion number. Although transfer of the transformed optimized data from the second optimized data storage portion 62 to the first optimized data storage portion 61 is required in the aforementioned embodiment, the transfer is not required in these modifications. Accordingly, data transfer time required for optimization can be saved. (This is because the data size of the optimized data storage portion number as data indicating a reference designation is far smaller than that of the optimized data. ) There is an effect that the total transformation time required for the optimizing process can be shortened in accordance with the data size.

A second embodiment of the invention will be described below.

Although the first embodiment is configured so that the optimized main program and the optimized data are rewritten during the one-cycle stop state after the optimizing process, the second embodiment is configured so that the optimized data are rewritten without once stop of the operation of the machine tool such as the one-cycle stop.

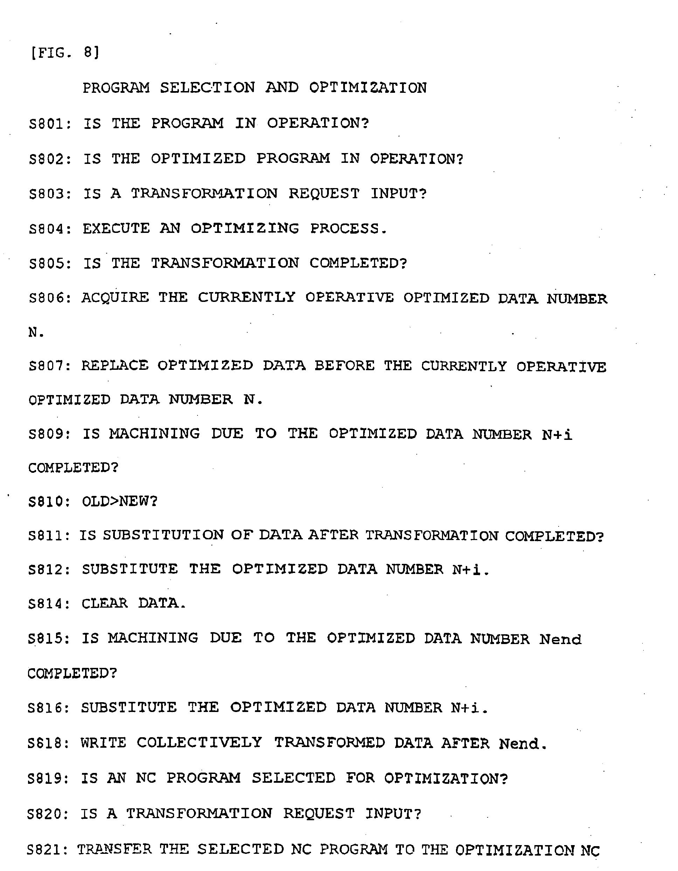

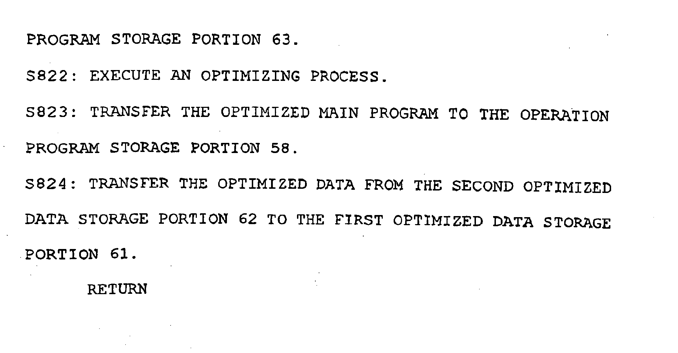

The second embodiment will be described in detail with reference to Fig. 8.

Steps S819 to S824 in Fig. 8 are equivalent to the steps S511 to S516 in Fig. 5. The description of the steps S819 to S824 will be omitted.

First, how to execute program transformation will be described. Incidentally, this embodiment is applied to the case where only replacement of the optimized data is performed in the optimizing process.

First, in S801, a judgment is made as to whether the machine tool 1 is in programmed operation or not. When the judgment gives "YES", the current position of the routine goes to the next step S802 in which a judgment is made as to whether the machine tool 1 is in operation based on an optimized program or not. When the judgment gives "NO", the current position of the routine returns without anything to be done. When the judgment in S802 gives "YES", the current position of the routine goes to S803 in which a judgment is made as to whether a transformation request is input on the control panel of the numerical control apparatus or not. when the judgment gives "NO" indicating that there is no transformation request input, the current position of the routine returns without anything to be done. When the judgment in S803 gives "YES" indicating that a transformation request is input, the current position of the routine goes to S804 in which an NC program as an obj ective is transferred from the optimization NC program storage portion 63 to a predetermined region of the RAM 56 and the optimizing process is carried out by the transformer executed on the RAM 56. Because the optimizing process has been already described, the description of the optimizing process will be omitted. After the optimizing process, the current position of the routine goes to S805 in which a judgment is made as to whether transformation is completed or not. Unless transformation is completed, the step S805 is looped so that the current position of the routine cannot go from S805 to the next step. When transformation is completed, the current position of the routine goes to S806 in which the data number N of the optimized data used for machining currently executed in the machine tool 1 is acquired. (The "data number" means a number allocated to each line such as a block number in the NC program.) In S807, a data portion of the optimized data before the acquired data number N, that is, a data portion of the optimized data already used for machining one workpiece is replaced by a data portion of the new optimized data obtained by transformation in S804 before N. In S808 after the completion of the step S807, counter i is set at "0". In S809, a judgment is further made as to whether machining of the workpiece due to the optimized data number N+i (indicating non-substituted data) is completed or not. While the judgment gives "NO", the step S809 is repeated. When the judgment gives "YES", the current position of the routine goes to the next step S810 in which a judgment is made as to whether the number OLD of optimized data currently used for machining is larger than the number NEW of optimized data obtained by re-transformation as a result of execution of the step S805. When the judgment gives "YES", that is, when a decision is made that the number OLD of optimized data currently used for machining is larger than the number NEW of optimized data obtained by re-transformation, the current position of the routine goes to S811 in which a judgment is further made as to whether optimized data written in the optimized data storage portion designated as a designation to be referred to by the optimized main program and currently used for machining have been replaced by optimized data obtained by re-transformation. When the judgment gives "YES", that is, when a decision is made that all data after transformation have been already written, the current position of the routine goes to S814 in which optimized data remaining without replacement are cleared up from the optimized data storage portion because optimized data of the number equal to the difference between the number OLD of data before transformation and the number NEW of data after transformation are stored as non-transformed data without replacement, in the optimized data storage portion. When the judgment in S811 gives "NO", the current position of the routine goes to S812 in which the optimized data number N+i in optimized data currently used for machining is replaced by data of the optimized data number N+i after transformation. Then, in S813, "1" is added to i and the steps S809 to S813 are repeated newly.

When the judgment in S810 gives "NO", that is, when a decision is made that the number OLD of optimized data currently used for machining is not larger than the number NEW of optimized data obtained by re-transformation, the current position of the routine goes to S815 in which a judgment is made as to whether machining due to the optimized data number Nend is completed or not. When the judgment gives "YES", the current position of the routine goes to S818 in which transformed data after Nend are collectively written in the optimized data storage portion. That is, at the point of time when machining due to the optimized data number Nend is completed, data of the number equal to Nend are substituted as data after transformation but non-substituted data after transformation remain. Therefore, transformed data after Nend are collectively written because the remaining non-substituted transformed data can be written without any trouble after machining due to the optimized data number Nend is completed. Then, the current position of the routine returns.

When the judgment in S815 gives "NO", the steps S816 and S817 are carried out in the same manner as the steps S812 and S813.

The function achieved by the configuration shown in Fig. 8 will be described below. In the configuration shown in Fig. 8, the same function as in the first embodiment is achieved by the steps up to S805. The function achieved by the steps S806 to S812 is that optimized data not replaced because of the data currently executed or not executed by the machine tool 1 are replaced by newly transformed optimized data whenever machining based on the optimized data is completed. That is, when a transformation request is input in S803 and then transformation is completed, the number N of the optimized data currently executed by the machine tool 1 is acquired. A data portion of the table before the number N is replaced first because there is no influence on machining by the machine tool 1 even in the case where the data portion is renewed. The meaning of "no influence" will be described in brief. If a set of data is renewed in the middle of machining, there is a possibility that data discontinuity between a renewed portion and the other portion will become a subject of discussion. In this embodiment, because optimized data in aportion after completion of machining are renewed, the renewed portion can be used as data for machining a new workpiece in the next cycle. Accordingly, there is no influence on the currently machined workpiece. Because data of the data number N+i are renewed in order of completion of machining on the basis of the aforementioned thought, the optimized data can be renewed without any bad influence on the operation of the machine tool 1 andwithout necessity of stopping the operation of the machine tool 1.

Although description has been made preliminarily that this embodiment is used only for replacement of optimized data, it is to be understood from the above description that such replacement per se cannot be made in the case where the assumption that workpieces of the same are machined is not satisfied because the workpieces are not substantially equal in data quantity of optimized data. Accordingly, the optimizing process described in this embodiment cannot hold in the case where different types of workpieces are used.

Only an example in which electronic cam data (table of time and coordinates) are generated as a subject of optimization by the transformer is shown in the embodiments described above. other examples of the subject of optimization will be described.

Firstly, an example in which an NC program per se is rewritten on the basis of an NC program will be described. For example, NC commands include commands (cycle commands) for performing a plurality of operations by one command. This type command performs a next operation by judging a current state. For this reason, a first time for judging a current state and a second time for deciding a next operation are required. Moreover, commands having no relation to the state of NC at the time of execution of a block may be pre-read so that coordinates of a next moved point can be predicted. For example, acceleration, deceleration, etc. can be calculated before execution. It is however impossible to pre-read the cycle commands.

All NC codes are read, the contents of the NC codes are analyzed (in the same manner as the transformer), and a state at the time of arrival of the cycle command is predicted by calculation. The cycle can be separated into a plurality of operations on the basis of the predicted state. For this reason, such operations expanded in advance can be written in the NC program again without necessity of performing an expanding process to obtain a plurality of operations first at the time of actual arrival of the cycle command as in NC.

Aprocess for rewriting the cycle command in the NC program in this manner can be called "optimization". A tool exchange operation will be described in brief as an example of the optimization. First, the current X coordinate is examined. Then, the X coordinate is not moved when X is larger than the tool exchange position. The X coordinate is moved to the tool exchange position when X is smaller than the tool exchange position. The X coordinate is moved in such a manner that the Y axis is moved to the position of a selected tool. An optimizing process from the point of view of increasing operating speed due to change of the command position can be taken as one of the other examples. In this case, the optimizing process is a process for quickening or delaying the command position of an NC code relative to the originally designated position. Moreover, optimization from the point of view of attaining high speed by changing the way of description into another way in the case where processing becomes slow because the description of the NC program is not appropriate may be conceived as one of the other examples. For example, in the case where an NC program before optimization is formed so that the locus of the tool is curved at right angles, the NC program may be optimized so that each corner in the locus is changed to a circular arc to attain reduction in time and smoothness in operation to thereby reduce mechanical vibration. Incidentally, when changes are made in this manner, the optimized data may be used as a sub program which can be called by a main program.

Incidentally, program optimization in the invention is not limited to the embodiments and it is a matter of course that various changes may be made without departing from the gist of the invention.

As described above, in the numerical control apparatus for machine tool according to the invention, increase in total machining time caused by once stopping of the operation of the machine tool in order to correct the position of a cutting edge of a tool can be minimized. In addition, a troublesome operation for stopping or restarting the operation of the machine tool can be dispensed with. As a result, the same feeling of use as in the case where an NC program is used for machining can be secured. There can be obtained an excellent effect that handling property can be improved remarkably.

## Claims

1. A numerical control apparatus for machine tool, comprising:
an NC program storage portion for storing an NC program generated for machining a material into a desired shape;
a transformer means for performing an optimizing process for analyzing the contents of said NC program and parameters set in said machine tool and transforming said NC program so that operation designated by the contents of said NC program and said parameters can be carried out in an optimum condition;
an optimized program generated by said transformer means and containing an optimized main program, and optimized data;
a first optimized data storage portion for storing and holding said optimized data used when said machine tool is operated on the basis of said optimized program; and
a second optimized data storage portion for storing and holding said optimized data used when said machine tool is operated on the basis of said optimized program,
wherein while said machine tool is operated on the basis of said optimized program, said transformer means can generate new optimized data on the basis of said NC program as a transformation source of said optimized program used for operating said machine tool on the basis of said optimized data stored in one of said first and second optimized data storage portions and can write said transformed data in the other of said first and second optimized data storage portions.

2. The numerical control apparatus for machine tool according to claim 1, wherein said transformer means includes:
a currently operative data detection means for detecting currently operative data of said optimized data used for operating said machine tool;
a first data replacement means through which data already used for machining before said currently operative data detected by said currently operative data detection means are replaced by corresponding data after transformation;
a machining completion judgment means for judging whether machining due to said currently operative data detected by said currently operative data detection means is completed or not;
a second data replacement means through which said currently operative data are replaced by corresponding data after transformation when said machining completion judgment means decides completion of machining; and
a data replacement completion judgment means for judging whether replacement of all data is completed or not.

3. The numerical control apparatus for machine tool according to claim 1, wherein said transformer means includes:
a re-transformation completion judgment means for judging completion of re-transformation which is executed to obtain re-transformed optimized data while said machine tool is operated on the basis of said optimized data;
a one-cycle stop means for shifting said operated machine tool into a one-cycle stop state for stopping only the operation of controlling a control axis after completion of re-transformation is decided by said re-transformation completion judgment means; and
an operation restart means for restarting the operation of controlling said control axis of said machine tool after the one-cycle stop, and wherein data transfer between said first and second optimized data storage portions is performed during the one-cycle stop.

4. The numerical control apparatus for machine tool according to claim 1, wherein said transformer means includes:
a re-transformation completion judgment means for judging completion of re-transformation which is executed to obtain re-transformed optimized data while said machine tool is operated on the basis of said optimized data;
a one-cycle stop means for shifting said operated machine tool into a one-cycle stop state for stopping only the operation of controlling a control axis after completion of re-transformation is decided by said re-transformation completion judgment means;
an operation restart means for restarting the operation of controlling said control axis of said machine tool after the one-cycle stop; and
an optimized data storage portion number rewrite means by which an optimized data storage portion number set for said optimized main program' s referring to said optimized data during the one-cycle stop is rewritten to the number of said optimized data storage portion in which said transformed optimized data are stored.

5. The numerical control apparatus for machine tool, according to claim 1, further comprising:
an optimized program generated by the trans former means containing an optimized main program and an electronic cam data table provided so that data indicating command positions on a control axis relative to positions on a reference axis are stored and held as an optimized data in accordance with a workpiece to be machined;
an electronic cam control means for reading said data corresponding to a detected value on said reference axis and executing an electronic camprogram for controlling the movement on said control axis as an objective;
a tool cutting edge position correction input means for inputting a correction value of the position of a cutting edge of a tool;
a correction storage means for storing and holding said correction value;
a transformer means for reading said tool cutting edge position correction value from said correction storage means and transforming saidNCprogram into said electronic camprogram on the basis of said tool cutting edge position correction value in parallel with electronic cam control during execution of the electronic cam control;
a transformation command means for inputting a command to the numerical control apparatus to make said transformer means execute transformation;
a re-transformation completion detection means for detecting completion of said transformer means' transformation of said NC program and said tool cutting edge position correction value into said electronic cam data table after said transformation command means gives said transformation command; and
a replacement means for wri ting the re-trans formed data on said electronic cam data table when completion of re-transformation is detected by said re-transformation completion detection means; the writing is performed while said machine tool is operated on the basis of the optimized program using a data on said electronic cam data table stored in one of the first and second optimized data storage portions, and the re-transformed data on said electronic cam data table can be written in the other of the first and second optimized data storage portions.
